# EUROPÄISCHE PATENTSCHRIFT

(11) **EP 3 101 248 B1**
(45) Veröffentlichungstag und Bekanntmachung des Hinweises auf die Patenterteilung: **22.04.2020**
(21) Anmeldenummer: 16001186.2
(22) Anmeldetag: 24.05.2016
(51) Int. Cl.: F02B 37/18, F01N 13/08, F15D 1/04, B01F 5/00, B01F 3/02

(54) **ABGASSTRANG FÜR EINE BRENNKRAFTMASCHINE**
EXHAUST-GAS SECTION FOR A COMBUSTION ENGINE
CONDUITE DE GAZ D'ÉCHAPPEMENT POUR UNE MACHINE À COMBUSTION INTERNE

(30) Priorität: 06.06.2015 DE 102015007414
(43) Veröffentlichungstag der Anmeldung: 07.12.2016
(73) Patentinhaber: MAN Truck & Bus SE, 80995 München (DE)
(72) Erfinder: Menard, Pierre, 90478 Nürnberg (DE)
(74) Vertreter: Liebl, Thomas

(56) Entgegenhaltungen:
- WO-A1-89/07194
- DE-A1- 19 549 020
- DE-A1-102007 021 763

## Beschreibung

Die Erfindung betrifft einen Abgasstrang für eine Brennkraftmaschine nach dem Oberbegriff des Patentanspruches 1 sowie eine Brennkraftmaschine mit dem Abgasstrang nach einem der Patentansprüche 1 bis 9. Es ist bekannt, bei einer Brennkraftmaschine einen Abgasturbolader vorzusehen. Ein derartiger Abgasturbolader weist eine in einem Abgasstrang angeordnete Abgasturbine mit einem Turbinen-Strömungskanal auf, mittels dem ein in die Abgasturbine einströmender Abgasstrom über ein Turbinenrad der Abgasturbine geleitet wird. Dadurch werden das Turbinenrad des Abgasturboladers und ein mit dem Turbinenrad verbundenes Verdichterrad des Abgasturboladers angetrieben. Mittels des Verdichterrads wird dann die der Brennkraftmaschine zugeführte Verbrennungsluft verdichtet bzw. komprimiert.

Weiter ist es auch bekannt, an der Abgasturbine ein Wastegate bzw. ein Wastegate-Ventil vorzusehen, mittels dem zumindest ein Teil des in die Abgasturbine einströmenden Abgasstroms an dem Turbinenrad vorbeigeleitet werden kann. Mittels des Wastegate-Ventils kann beispielsweise die Verdichtung bzw. der Ladedruck der Verbrennungsluft eingestellt bzw. verstellt werden. Das Wastegate-Ventil wird dabei üblicherweise mittels einer Regel- und/oder Steuereinrichtung selbsttätig geregelt bzw. gesteuert.

Des Weiteren münden der den Abgasstrom über das Turbinenrad führende Turbinen-Strömungskanal und das Wastegate auf einer Abströmseite der Abgasturbine in einen abgasturbinenseitigen Mündungsraum ein. Dieser Mündungsraum ist derart großvolumig ausgebildet, dass sich eine starke Querschnittserhöhung des Turbinen-Strömungskanals und eine hochturbulente Abgasströmung in dem Mündungsraum ergibt. Diese hochturbulente Abgasströmung bewirkt, in Abgas-Strömungsrichtung gesehen, stromab des Turbinenrads der Abgasturbine einen erhöhten Abgasdruck, der sich negativ auf die Verdichtungsleistung des Abgasturboladers auswirkt.

Aus der DE 195 49 020 A1 ist eine Abgasregeleinrichtung für einen Abgasturbolader bekannt.

Aufgabe der Erfindung ist es daher, einen Abgasstrang für eine Brennkraftmaschine bereitzustellen, bei dem die Verdichtungsleistung des Abgasturboladers auf einfache Weise erhöht ist.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Abgasstrang für eine Brennkraftmaschine vorgeschlagen, mit einer in dem Abgasstrang angeordneten Abgasturbine, insbesondere einer Abgasturbine eines Abgasturboladers, wobei die ein Abgasturbinengehäuse aufweisende Abgasturbine einen Turbinen-Strömungskanal aufweist, in den ein von der Brennkraftmaschine kommender Abgasstrom einströmt und in dem ein von dem Abgasstrom antreibbares Turbinenrad der Abgasturbine angeordnet ist, wobei die Abgasturbine weiter ein Wastegate aufweist, mittels dem ein Teil des in die Abgasturbine einströmenden Abgasstroms als Wastegate-Abgasstrom an dem Turbinenrad vorbeileitbar ist, wobei der den Abgasstrom über das Turbinenrad führende Turbinen-Strömungskanal und das Wastegate auf einer Abströmseite der Abgasturbine in einen abgasturbinenseitigen Mündungsraum einmünden, und wobei an die Abströmseite der Abgasturbine ein Abströmkanal anschließt, über den ein von dem Turbinenrad kommender Abgasstrom und der über das Wastegate geführte Wastegate-Abgasstrom abströmen. Erfindungsgemäß ist der abgasturbinenseitige Mündungsraum in einen ersten abgasturbinenseitigen Turbinen-Abgasstrom-Einströmbereich, in den der von dem Turbinenrad kommende Abgasstrom einströmt und an den der Abströmkanal anschließt, und in einen strömungstechnisch von dem ersten Einströmbereich getrennten, zweiten abgasturbinenseitigen Wastegate-Abgasstrom-Einströmbereich, in den der über das Wastegate geführte Abgasstrom einströmt, unterteilt. Zudem ist ein sich an den Wastegate-Abgasstrom-Einströmbereich anschließender Wastegate-Strömungskanal vorgesehen, der stromab des Turbinen-Abgasstrom-Einströmbereiches in den sich an diesen anschließenden Abströmkanal dergestalt, insbesondere tangential, einmündet, dass der über den Wastegate-Strömungskanal in den Abströmkanal eingeleitete Wastegate-Abgasstrom als Mantelströmung an der Innenwand des Abströmkanals sowie spiralförmig um eine zentrale Längsachse des Abströmkanals in Richtung von der Abgasturbine weg durch den Abströmkanal strömt.

Dadurch wird die Verdichtungsleistung des Abgasturboladers auf einfache Weise erhöht, da durch die Unterteilung bzw. Aufteilung des Mündungsraums und durch die spiralförmige Mantelströmung des Wastegate-Abgasstroms durch den Abströmkanal der Abgasdruck, in Abgas-Strömungsrichtung gesehen, stromab des Turbinenrads deutlich verringert wird. Somit wird mittels des erfindungsgemäßen Abgasstrangs eine besonders energieeffiziente Abgasführung realisiert.

Unter der Begrifflichkeit "Wastegate" ist jegliche Art eines an der Abgasturbine vorgesehenen Bypasskanals bzw. einer an der Abgasturbine vorgesehenen Bypassöffnung zu verstehen, mittels der der Abgasstrom an dem Turbinenrad vorbeigeleitet und die mittels einer Stelleinrichtung zumindest teilweise geöffnet und geschlossen werden kann.

Die Stelleinrichtung kann grundsätzlich beliebig gestaltet sein. Beispielsweise kann die Stelleinrichtung derart ausgebildet sein, dass die Bypassöffnung in Abhängigkeit vom Abgasdruck im Inneren der Abgasturbine selbsttätig geöffnet und geschlossen wird. Bevorzugt ist es jedoch, wenn die Stelleinrichtung durch ein mittels einer Regel- und/oder Steuereinrichtung regelbares bzw. steuerbares Ventilelement gebildet ist, mittels dem die Bypassöffnung geöffnet und geschlossen werden kann.

Erfindungsgemäß schließt sich der Abströmkanal unmittelbar an den abgasturbinenseitigen Turbinen-Abgasstrom-Einströmbereich an, dergestalt, dass der von dem Turbinenrad kommende Abgasstrom in Richtung der zentralen Längsachse des Abströmkanals von der Abgasturbine weg durch den Abströmkanal strömt. Auf diese Weise wird der Abgasdruck, in Abgas-Strömungsrichtung gesehen, stromab des Turbinenrads der Abgasturbine weiter verringert. Zudem wird auch die Vermischung des von dem Turbinenrad kommenden Abgasstroms mit dem Wastegate-Abgasstrom verbessert.

Vorzugsweise sind die einander zugeordneten Mündungsöffnungen des abgasturbinenseitigen Turbinen-Abgasstrom-Einströmbereichs und des sich daran anschließenden Abströmkanals im Wesentlichen gleich ausgebildet, um den Abgasdruck, in Abgas-Strömungsrichtung gesehen, stromab des Turbinenrads der Abgasturbine weiter zu verringern. Bevorzugt ist dabei vorgesehen, dass die einander zugeordneten Mündungsöffnungen des abgasturbinenseitigen Turbinen-Abgasstrom-Einströmbereichs und des sich daran anschließenden Abströmkanals miteinander fluchten. Dadurch wird auf einfache und zuverlässige Weise sichergestellt, dass der von dem Turbinenrad kommende Abgasstrom in Richtung der zentralen Längsachse des Abströmkanals von der Abgasturbine weg durch den Abströmkanal strömt.

Bevorzugt ist die Querschnittsfläche, vorzugsweise der Durchmesser, des Wastegate-Strömungskanals wenigstens im Bereich seiner Einmündung in den Abströmkanal geringer als die Querschnittsfläche, vorzugsweise der Durchmesser, des Abströmkanals. Dadurch wird erreicht, dass der von dem Turbinenrad kommende Abgasstrom und der Wastgate-Abgasstrom wenigstens im Bereich der Einmündung des Wastegate-Strömungskanals in den Abströmkanal eine ähnliche Geschwindigkeit aufweisen. Dies verringert den Abgasdruck, in Abgas-Strömungsrichtung gesehen, stromab des Turbinenrads des Abgasturboladers noch weiter.

Erfindungsgemäß schließt der Wastegate-Strömungskanal, bezogen auf einen Querschnitt durch den Abströmkanal, tangential an einen äußeren Wandabschnitt des Abströmkanals an, vorzugsweise dergestalt, dass ein, bezogen auf den Querschnitt, äußerer und gerader mündungsseitiger Kanalwandabschnitt des Wastegate-Strömungskanals in etwa auf Höhe eines Scheitelpunkts des Abströmkanals liegt. Dadurch wird auf einfache Weise sichergestellt, dass der in den Abströmkanal eingeleitete Wastegate-Abgasstrom als spiralförmige Mantelströmung an der Innenwand des Abströmkanals strömt. Bevorzugt geht der mündungsseitige Kanalwandabschnitt des Wastegate-Strömungskanals dabei kontinuierlich, das heißt ohne Sprung, Kante oder dergleichen, in den Abströmkanal über, um eine starke Verwirbelung des in den Abströmkanal eingeleiteten Wastegate-Abgasstroms zu vermeiden.

Bevorzugt weist eine zentrale Längsachse des Wastegate-Strömungskanals einen definierten Abstand von dem Scheitelpunkt des Abströmkanal auf, vorzugsweise einen Abstand, der in etwa einem Drittel bis zwei Drittel, vorzugsweise in etwa der Hälfte, des Durchmessers des Wastegate-Strömungskanals im Mündungsbereich des Wastegate-Strömungskanals in den Abströmkanal entspricht.

Weiter bevorzugt mündet der Wastegate-Strömungskanal derart winklig in den Abströmkanal ein, dass ein Winkel zwischen einerseits wenigstens dem mündungsseitigen Teilbereich des Wastegate-Strömungskanals und damit dem in den Abströmkanal einströmenden Wastegate-Abgasstrom und andererseits einer durch den Querschnitt des Abströmkanals im Mündungsbereich gebildeten und/oder quer zur Längsachse des Abströmkanals im Mündungsbereich des Wastegate-Strömungskanals ausgerichteten Querschnittsebene einen Winkelwert von 30° bis 80°, bevorzugt von 40° bis 80°, besonders bevorzugt von 45° bis 80°, aufweist. Durch diese Anwinkelung wird zuverlässig sichergestellt, dass sich der in den Abströmkanal eingeleitete Wastegate-Abgasstrom von der Abgasturbine weg durch den Abströmkanal strömt. Ein größerer Winkelwert zwischen dem Wastegate-Abgasstrom und der Querschnittsebene verringert dabei den Abgasdruck, in Abgas-Strömungsrichtung gesehen, stromab des Turbinenrads der Abgasturbine.

In einer bevorzugten Ausgestaltung weist der Abströmkanal einen runden, insbesondere einen kreisrunden, Querschnitt auf. Auf diese Weise kann die spiralförmige Mantelströmung des in den Abströmkanal eingeleiteten Wastegate-Abgasstroms durch den Abströmkanal einfach und zuverlässig realisiert werden.

Vorzugsweise ist der Querschnitt des Abströmkanals entlang des Abgassammel-Strömungskanals im Wesentlichen konstant, um eine harmonische Mischung des von der Turbine kommenden Abgasstroms und des Wastegate-Abgasstroms in dem Abströmkanal zu realisieren. Zudem wird dadurch der Abgasdruck, in Abgas-Strömungsrichtung gesehen, stromab des Turbinenrads der Abgasturbine weiter verringert.

Besonders bevorzugt ist der Querschnitt des Wastegate-Strömungskanals stromab des Wastegates größer ausgebildet als der maximale Öffnungsquerschnitt der Wastegateöffnung des Wastegates. Auf diese Weise wird verhindert, dass sich der Wastegate-Abgasstrom, in Abgas-Strömungsrichtung gesehen, stromab des Wastegates in dem Wastegate-Strömungskanal staut. Eine derartige Stauung bzw. ein hoher Abgasdruck, in Abgas-Strömungsrichtung gesehen, stromab des Wastegates vermindert die Effektivität des Wastegates deutlich.

Vorzugsweise ist der abgasturbinenseitige Turbinen-Abgasstrom-Einströmbereich auf der Abströmseite der Abgasturbine mittels wenigstens einer mündungsraumseitig vorgesehenen Zwischenwand von dem abgasturbinenseitigen Wastegate-Abgasstrom-Einströmbereich abgetrennt, um die Unterteilung des Mündungsraumes zuverlässig sicherzustellen.

Erfindungsgemäß ist der Abströmkanal durch ein separates Bauteil gebildet, das mit der Abgasturbine bzw. mit einem Abgasturbinengehäuse verbunden ist. Dadurch weist der erfindungsgemäße Abgasstrang einen besonders einfachen Aufbau auf. Bevorzugt ist dabei vorgesehen, dass die Abgasturbine und das separate Bauteil mittels einer Flanschverbindung miteinander verbunden sind, um die Abgasturbine und das separate Bauteil auf einfache und zuverlässige Weise miteinander zu verbinden.

Besonders bevorzugt ist der Wastegate-Strömungskanal durch das separate Bauteil gebildet, um den Aufbau des erfindungsgemäßen Abgasstrangs zu vereinfachen.

Des Weiteren ist auch eine Brennkraftmaschine mit dem erfindungsgemäßen Abgasstrang beansprucht. Die sich hieraus ergebenden Vorteile sind ebenfalls identisch mit den bereits gewürdigten Vorteilen des erfindungsgemäßen Abgasstrangs, so dass auch diese hier nicht wiederholt werden. Die Brennkraftmaschine kann dabei beispielsweise als Fahrzeugbrennkraftmaschine oder als stationäre Brennkraftmaschine ausgebildet sein.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Perspektivdarstellung einen Teil eines erfindungsgemäßen Abgasstrangs;
- Fig. 2: in einer Schnittdarstellung einen Teil des Abgasstrangs;
- Fig. 3: in einer schematischen Darstellung einen Teil des Abgasstrangs;
- Fig. 4: in einer schematischen Schnittdarstellung ein Abgasstrangelement des Abgasstrangs; und
- Fig. 5: in einer Darstellung gemäß Fig. 2 einen Abgasstrang gemäß dem Stand der Technik.

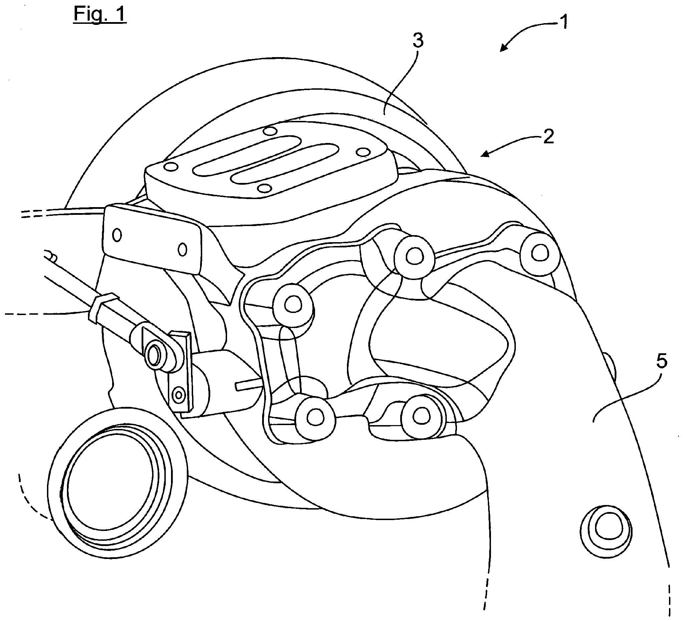

In Fig. 1 ist ein Teil eines erfindungsgemäßen Abgasstrangs 1 einer Brennkraftmaschine gezeigt. Der Abgasstrang 1 weist eine Abgasturbine 3 eines Abgasturboladers 2 und ein, in Abgas-Strömungsrichtung gesehen, stromab der Abgasturbine 3 angeordnetes, mit der Abgasturbine 3 verbundenes Abgasrohr bzw. Abgasstrangelement 5 auf. Die Abgasturbine 3 und das Abgasstrangelement 5 sind hier beispielhaft mittels einer Flanschverbindung miteinander verbunden. Alternativ könnten die Abgasturbine 3 und das Abgasstrangelement 5 beispielsweise aber auch materialeinheitlich und/oder einstückig miteinander verbunden sein.

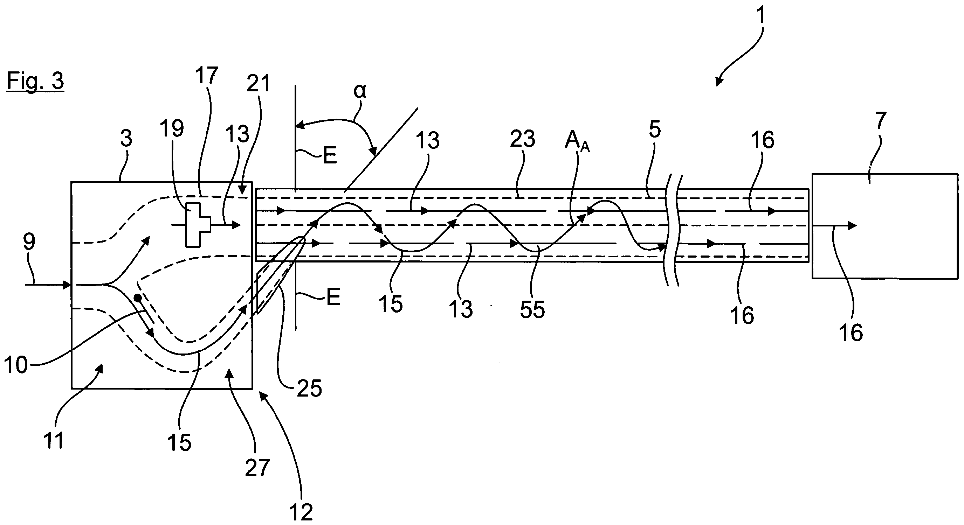

Gemäß Fig. 3 strömt beim Betrieb der Brennkraftmaschine ein von der Brennkraftmaschine kommender Abgasstrom 9 in die Abgasturbine 3 ein. Sofern ein Wastegate 11 bzw. ein Wastegate-Ventil 10 der Abgasturbine 3 zumindest teilweise geöffnet ist, wird der durch die Abgasturbine 3 strömende Abgasstrom 9 in einen Turbinenrad-Abgasstrom 13 und in einen Wastegate-Abgasstrom 15 aufgeteilt. Der Turbinenrad-Abgasstrom 13 strömt in diesem Fall durch einen Turbinen-Strömungskanal 17 der Abgasturbine 3, mittels dem der Turbinenrad-Abgasstrom 13 über ein in dem Turbinen-Strömungskanal 17 angeordnetes Turbinenrad 19 der Abgasturbine 3 geleitet wird. Der Wastegate-Abgasstrom 15 strömt in diesem Fall durch das Wastegate 11 mittels dem der Wastegate-Abgasstrom 15 an dem Turbinenrad 19 des Abgasturboladers 3 vorbeigeleitet wird.

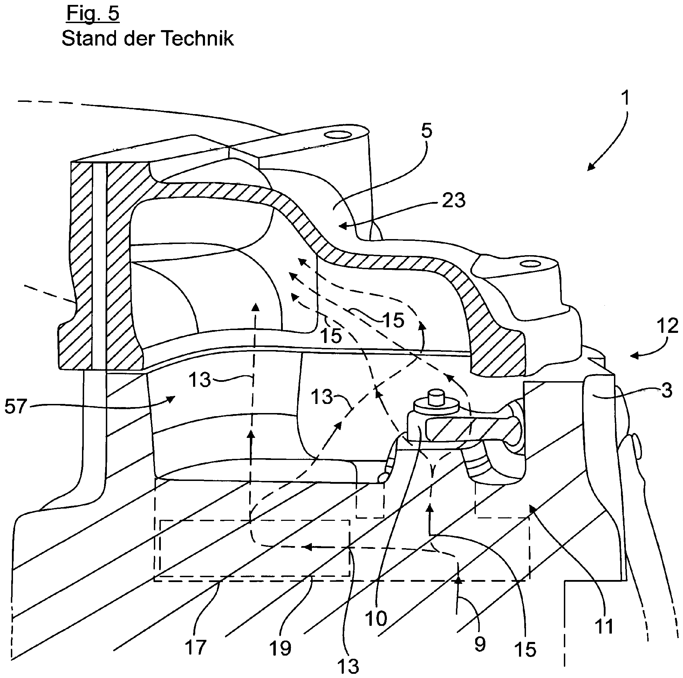

In Fig. 5 ist ein Schnitt durch einen Abgasstrang 1 gemäß dem Stand der Technik gezeigt. Der Turbinenrad-Strömungskanal 17 und das Wastegate 10 münden hier an einer Abströmseite 12 der Abgasturbine 3 in einen großvolumigen Mündungsraum 57 der Abgasturbine 3 ein. Dies bewirkt, in Abgas-Strömungsrichtung gesehen, stromab des Turbinenrads 19 des Abgasturboladers 3 einen hohen Abgasdruck, der sich negativ auf die Verdichtungsleistung des Abgasturboladers 3 auswirkt.

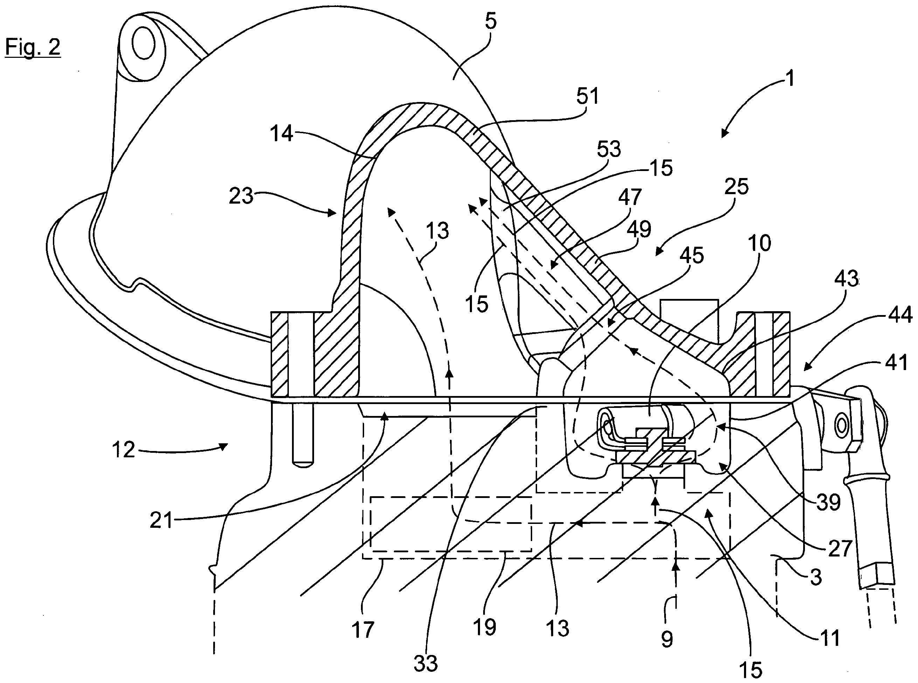

Im Gegensatz zum in Fig. 5 gezeigten Stand der Technik ist bei dem erfindungsgemäßen Abgasstrang 1, wie in Fig. 2 gezeigt ist, der Mündungsraum 57 in einen ersten abgasturbinenseitigen Turbinen-Abgasstrom-Einströmbereich 21 und in einen strömungstechnisch von dem ersten Einströmbereich 21 getrennten, zweiten abgasturbinenseitigen Wastegate-Abgasstrom-Einströmbereich 27 unterteilt. In den ersten Einströmbereich 21 strömt der von dem Turbinenrad 19 kommende Abgasstrom 13 ein. Zudem schließt an den ersten Einströmbereich 21 ein Abströmkanal 23 des Abgasrohrs 5 an, so dass der von dem Turbinenrad 19 kommende Turbinenrad-Abgastrom 13 über den ersten Einströmbereich 21 in den Abströmkanal 23 strömt. In den zweiten Einströmbereich 27 strömt der über das Wastegate 11 geführte Abgasstrom 15 ein. Die Abtrennung des abgasturbinenseitigen Turbinen-Abgasstrom-Einströmbereichs 21 von dem abgasturbinenseitigen Wastegate-Abgasstrom-Einströmbereich 27 erfolgt hier beispielhaft mittels einer mündungsraumseitig vorgesehenen Zwischenwand 33.

Gemäß Fig. 3 schließt an den Wastegate-Abgasstrom-Einströmbereich 27 ein Wastegate-Strömungskanal 25 an, der stromab des Turbinen-Abgasstrom-Einströmbereiches 21 in den sich an diesen anschließenden Abströmkanal 23 dergestalt einmündet, dass der über das Wastegate 11 und den Wastegate-Abgasstrom-Einströmbereich 27 in den Abströmkanal 23 eingeleitete Wastegate-Abgasstrom 15 als Mantelströmung an einer Innenwand 14 des Abströmkanals 23 sowie spiralförmig um eine zentrale Längsachse A_{A} des Abströmkanals 23 in Richtung von der Abgasturbine 3 weg durch den Abströmkanal 23 strömt. Auf diese Weise wird, im Vergleich zum Stand der Technik, der Abgasdruck, in Abgas-Strömungsrichtung gesehen, stromab des Turbinenrads 19 der Abgasturbine 3 deutlich verringert. Der Wastegate-Strömungskanal 25 ist hier beispielhaft an dem Abgasstrangelement 5 ausgebildet.

In Abgas-Strömungsrichtung gesehen, stromab der Einmündung des Wastegate-Strömungskanals 25 in den Abströmkanal 23 vermischen sich der Turbinen-Abgasstrom 13 und der Wastgate-Abgasstrom 15 in dem Abströmkanal 23 zu einem Misch-Abgastrom 16. Der Misch-Abgasstrom 16 strömt hier beispielhaft in einen, in Abgas-Strömungsrichtung gesehen, stromab des Abgasstrangelements 5 angeordneten, mit dem Abgasstrangelement 5 verbundenen Abgasstrangabschnitt 7 ein. Der Abgasstrangabschnitt 7 kann beispielsweise mehrere Abgasnachbehandlungselemente, beispielsweise einen SCR-Katalysator oder einen Partikelfilter, aufweisen.

Wie in Fig. 2 gezeigt ist, sind die einander zugeordneten Mündungsöffnungen des abgasturbinenseitigen Turbinen-Abgasstrom-Einströmbereichs 21 und des sich daran anschließenden Abströmkanals 23 hier beispielhaft gleich bzw. identisch ausgebildet. Zudem sind die einander zugeordneten Mündungsöffnungen des abgasturbinenseitigen Turbinen-Abgasstrom-Einströmbereichs 21 und des sich daran anschließenden Abströmkanals 23 hier beispielhaft zueinander fluchtend angeordnet. Dadurch wird auf besonders zuverlässige Weise sichergestellt, dass, wie in Fig. 3 gezeigt ist, der von dem Turbinenrad 19 kommende Abgasstrom 13 in Richtung der zentralen Längsachse A_{A} des Abströmkanals 23 von der Abgasturbine 3 weg durch den Abströmkanal 23 strömt.

Weiter ist, hier lediglich beispielhaft, gemäß Fig. 3 die Querschnittsfläche des Wastegate-Strömungskanals 25 im Bereich seiner Einmündung in den Abströmkanal 23 geringer als die Querschnittsfläche des Abströmkanals 23. Dadurch wird erreicht, dass der Turbinenrad-Abgasstrom 13 und der Wastgate-Abgasstrom 15 im Bereich der Einmündung des Wastegate-Strömungskanals 25 in den Abströmkanal 23 eine ähnliche Geschwindigkeit aufweisen.

Wie in Fig. 3 weiter gezeigt ist, mündet der Wastegate-Strömungskanal 25 hier beispielhaft derart winklig in den Abströmkanal 23 ein, dass im Bereich der Mündung des Wastegate-Strömungskanals 25 in den Abströmkanal 23 ein Winkel α zwischen dem in den Abströmkanal 23 einströmenden Wastegate-Abgasstrom 15 und einer durch den Querschnitt des Abströmkanals 23 im Mündungsbereich gebildeten und quer zur Längsachse des Abströmkanals 23 im Mündungsbereich des Wastegate-Strömungskanals 25 ausgerichteten Querschnittsebene E einen Winkelwert von hier lediglich beispielsweise 45° aufweist. Durch diesen Winkelwert wird ein besonders geringer Abgasdruck, in Abgas-Strömungsrichtung gesehen, stromab des Turbinenrads 19 der Abgasturbine 3 erreicht.

Weiter weist der Abgassammel-Strömungskanal 23 hier beispielhaft einen runden Querschnitt auf. Der Querschnitt des Abgassammel-Strömungskanals 23 ist hier zudem entlang des Abgassammel-Strömungskanals 23 im Wesentlichen konstant.

Wie in Fig. 2 gezeigt ist, weist ein den Wastegate-Abgasstrom-Einströmbereich 27 bildender Kanalabschnitt 39 hier beispielhaft eine ringförmige Querschnittskontur auf. Zudem ist der Querschnitt des Kanalabschnitts 39 hier beispielhaft entlang des Kanalabschnitts 39 im Wesentlichen konstant. Des Weiteren geht eine den Wastegate-Strömungskanal 25 begrenzende Kanalwand 41 hier beispielhaft kontinuierlich in eine den Kanalabschnitt 39 begrenzende Kanalwand 43 über. In Abgas-Strömungsrichtung gesehen, stromab eines Verbindungsbereichs 44, an dem die Abgasturbine 3 und das Abgasstrangelement 5 miteinander verbunden sind, verjüngt sich hier beispielhaft der Querschnitt des Wastegate-Strömungskanals 25 bis hin zu einem Kanalabschnitt 45 des Wastegate-Strömungskanals 25. Der Kanalabschnitt 45 bildet hier den geringsten Querschnitt des Wastegate-Strömungskanal 25 aus. Der Kanalabschnitt 45 weist hier beispielhaft über seine gesamte Länge einen konstanten Querschnitt auf. Der Querschnitt des Kanalabschnitts 45 ist hier beispielhaft größer ausgebildet als der maximale Öffnungsquerschnitt des Wastegates 11 bzw. des Wastegate-Ventils 10.

Weiter schließt hier an den Kanalabschnitt 45 ein Anschluss-Kanalabschnitt 47 des Wastegate-Strömungskanals 25 an. Eine den Anschluss-Kanalabschnitt 47 begrenzende Kanalwand 49 geht hier beispielhaft kontinuierlich in die Abgassammel-Kanalwand 29 über. Dieser kontinuierliche Übergang ist hier beispielhaft mittels einer Verrundung 53 realisiert.

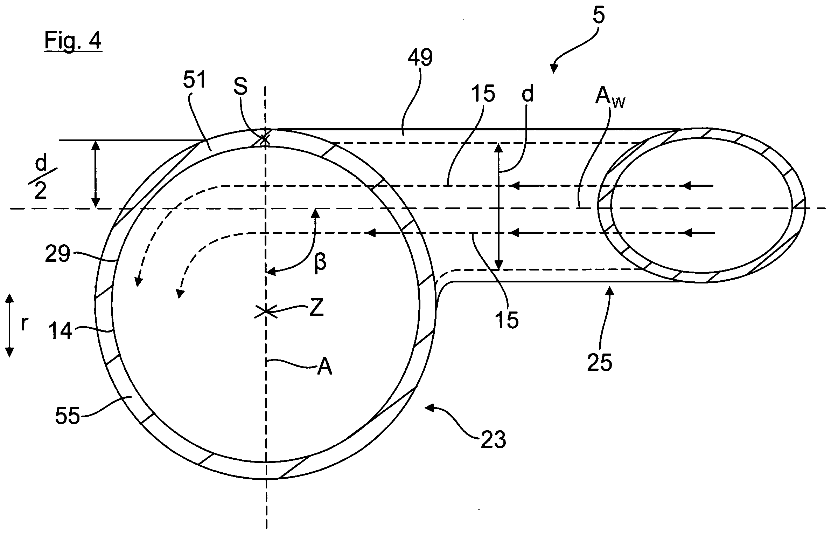

In Fig. 4 ist schematisch ein Querschnitt durch das Abgasstrangelement 5 gezeigt. Diese Darstellung soll verdeutlichen, dass sich der Wastegate-Strömungskanal 25 hier tangential und außermittig an einen, in Abströmkanal-Radialrichtung r gesehen, äußeren Wandabschnitt 51 des Abströmkanals 23 anschließt, dergestalt, dass in dem Mündungsbereich des Wastegate-Strömungskanals 25 in den Abströmkanal 23 ein, in Abströmkanal-Radialrichtung r gesehen, äußerer und gerade ausgebildeter Kanalwandabschnitt 49 des Wastegate-Strömungskanals 25 auf Höhe eines hier beispielhaft oberen Scheitelpunkts S des Abströmkanals 23 liegt. Dadurch wird auf besonders zuverlässige Weise sichergestellt, dass der in den Abströmkanal 23 einströmende Wastegate-Abgasstrom 15 als spiralförmige Mantelströmung an der Innenwand 14 des Abströmkanals 23 strömt. Zudem geht der äußere Wandabschnitt 51 des Abströmkanals 23 hier beispielhaft auch kontinuierlich in den Kanalwandabschnitt 49 des Wastegate-Strömungskanals 25 über. Der Scheitelpunkt S könnte selbstverständlich auch an jeder anderen Stelle des Außenumfangs liegen; insofern ist die Darstellung hier lediglich beispielhaft und schematisch zu verstehen.

Des Weiteren weist eine zentrale Längsachse Aw des Wastegate-Strömungskanals 25 hier beispielhaft im Mündungsbereich des Wastegate-Strömungskanals 25 in den Abströmkanal 23 einen Abstand von dem Scheitelpunkt S des Abströmkanals 23 auf, der bevorzugt und beispielhaft in etwa der Hälfte eines Durchmessers d des Wastegate-Strömungskanals 25 in dem Mündungsbereich entspricht. Zudem weist ein Winkel β zwischen der zentralen Längsachse Aw des Wastegate-Strömungskanals 25 und einer Achse A hier beispielhaft einen Winkelwert von 90° auf. Die Achse A verläuft durch den Scheitelpunkt S und einen zentralen Punkt Z, durch den die Längsachse A_{A} des Abströmkanals 23 verläuft.

### Bezugszeichenliste

- 1: Abgasstrang
- 2: Abgasturbolader
- 3: Abgasturbine
- 5: Abgasstrangelement
- 7: Abgasstrangabschnitt
- 9: Abgasstrom
- 10: Wastegate
- 11: Wastegate-Ventil
- 12: Abströmseite
- 13: Turbinenrad-Abgasstrom
- 14: Innenwand
- 15: Wastegate-Abgasstrom
- 16: Misch-Abgasstrom
- 17: Turbinen-Strömungskanal
- 19: Turbinenrad
- 21: Turbinen-Abgasstrom-Einströmbereich
- 23: Abströmkanal
- 25: Wastegate-Strömungskanal
- 27: Wastegate-Abgasstrom-Einströmbereich
- 33: Zwischenwand
- 39: Kanalabschnitt
- 41: Kanalwand
- 43: Kanalwand
- 44: Verbindungsbereich
- 45: Kanalabschnitt
- 47: Anschluss-Kanalabschnitt
- 49: Kanalwand
- 51: Wandabschnitt
- 53: Verrundung
- 57: Mündungsraum
- A: Achse
- A_{A}: zentrale Längsachse Abströmkanal
- A_{W}: zentrale Längsachse Wastegate-Strömungskanal
- d: Durchmesser
- E: Querschnittsebene
- Z: zentraler Punkt
- α: Winkel
- β: Winkel

## Patentansprüche

1. Abgasstrang für eine Brennkraftmaschine, mit einer in dem Abgasstrang angeordneten Abgasturbine (3),
wobei die ein Abgasturbinengehäuse aufweisende Abgasturbine (3) einen Turbinen-Strömungskanal (17) aufweist, in den ein von der Brennkraftmaschine kommender Abgasstrom (9) einströmt und in dem ein von dem Abgasstrom (9) antreibbares Turbinenrad (19) der Abgasturbine (3) angeordnet ist,
wobei die Abgasturbine (3) weiter ein Wastegate (11) aufweist, mittels dem ein Teil des in die Abgasturbine (3) einströmenden Abgasstroms (9) als Wastegate-Abgasstrom (15) an dem Turbinenrad (19) vorbeileitbar ist,
wobei der den Abgasstrom (9) über das Turbinenrad (19) führende Turbinen-Strömungskanal (17) und das Wastegate (11) auf einer Abströmseite (12) der Abgasturbine (3) in einen abgasturbinenseitigen Mündungsraum (57) einmünden, und
wobei an die Abströmseite (12) der Abgasturbine (3) ein Abströmkanal (23) anschließt, über den ein von dem Turbinenrad (19) kommender Abgasstrom (13) und der über das Wastegate (11) geführte Wastegate-Abgasstrom (15) abströmen,
wobei der abgasturbinenseitige Mündungsraum (57) in einen ersten abgasturbinenseitigen Turbinen-Abgasstrom-Einströmbereich (21), in den der von dem Turbinenrad (19) kommende Abgasstrom (13) einströmt und an den der Abströmkanal (23) anschließt, und in einen strömungstechnisch von dem ersten Einströmbereich (21) getrennten, zweiten abgasturbinenseitigen Wastegate-Abgasstrom-Einströmbereich (27), in den der über das Wastegate (11) geführte Abgasstrom (15) einströmt, unterteilt ist,
wobei ein sich an den Wastegate-Abgasstrom-Einströmbereich (27) anschließender Wastegate-Strömungskanal (25) vorgesehen ist, der stromab des Turbinen-Abgasstrom-Einströmbereiches (21) in den sich an diesen anschließenden Abströmkanal (23) dergestalt einmündet, dass der über den Wastegate-Strömungskanal (25) in den Abströmkanal (23) eingeleitete Wastegate-Abgasstrom (15) als Mantelströmung an der Innenwand (14) des Abströmkanals (23) sowie spiralförmig um eine zentrale Längsachse (A_{A}) des Abströmkanals (23) in Richtung von der Abgasturbine (3) weg durch den Abströmkanal (23) strömt,
wobei sich der Abströmkanal (23) unmittelbar an den abgasturbinenseitigen Turbinen-Abgasstrom-Einströmbereich (21) anschließt, dergestalt, dass der von dem Turbinenrad (19) kommende Abgasstrom (13) in Richtung der zentralen Längsachse (A_{A}) des Abströmkanals (23) von der Abgasturbine (3) weg durch den Abströmkanal (23) strömt, und
wobei der Abströmkanal (23) durch ein separates Bauteil gebildet ist, das mit der Abgasturbine (3) verbunden ist, **dadurch gekennzeichnet, dass**
der Wastegate-Strömungskanal (25), bezogen auf einen Querschnitt durch den Abströmkanal (23), tangential an einen äußeren Wandabschnitt (51) des Abströmkanals (23) anschließt, vorzugsweise dergestalt, dass ein, bezogen auf den Querschnitt, äußerer und gerade ausgebildeter mündungsseitiger Kanalwandabschnitt (49) des Wastegate-Strömungskanals (25) in etwa auf Höhe eines Scheitelpunkts (S) des Abströmkanals (23) liegt und vorzugsweise kontinuierlich in diesen übergeht.

2. Abgasstrang Anspruch 1, **dadurch gekennzeichnet, dass** die einander zugeordneten Mündungsöffnungen des abgasturbinenseitigen Turbinen-Abgasstrom-Einströmbereichs (21) und des sich daran anschließenden Abströmkanals (23) im Wesentlichen gleich ausgebildet sind, wobei bevorzugt vorgesehen ist, dass die einander zugeordneten Mündungsöffnungen des abgasturbinenseitigen Turbinen-Abgasstrom-Einströmbereichs (21) und des sich daran anschließenden Abströmkanals (23) zueinander fluchtend angeordnet sind.

3. Abgasstrang nach Anspruch 1 oder 2, **dadurch gekennzeichnet, dass** die Querschnittsfläche, vorzugsweise der Durchmesser, des Wastegate-Strömungskanals (25) wenigstens im Bereich seiner Einmündung in den Abströmkanal (23) geringer ist als die Querschnittsfläche, vorzugsweise der Durchmesser, des Abströmkanals (23).

4. Abgasstrang nach Anspruch 3, **dadurch gekennzeichnet, dass** eine zentrale Längsachse (A_{W}) des Wastegate-Strömungskanals (25) einen definierten Abstand von dem Scheitelpunkt (S) des Abströmkanals (23) aufweist, vorzugsweise einen Abstand aufweist, der in etwa einem Drittel bis zwei Drittel, vorzugsweise in etwa der Hälfte des Durchmessers des Wastegate-Strömungskanals (25) im Mündungsbereich des Wastegate-Strömungskanals (25) in den Abströmkanal (23) entspricht.

5. Abgasstrang nach einem der vorhergehenden Ansprüche, **dadurch gekennzeichnet, dass** der Wastegate-Strömungskanal (25) derart winklig in den Abströmkanal (23) einmündet, dass ein Winkel (α) zwischen einerseits wenigstens dem mündungsseitigen Teilbereich des Wastegate-Strömungskanals (25) und damit dem in den Abströmkanal (23) einströmenden Wastegate-Abgasstrom (15) und andererseits einer durch den Querschnitt des Abströmkanals (23) im Mündungsbereich gebildeten und/oder quer zur Längsachse (A_{A}) des Abströmkanals (23) im Mündungsbereich des Wastegate-Strömungskanals (25) ausgerichteten Querschnittsebene (E) einen Winkelwert von 30° bis 80°, bevorzugt von 40° bis 80°, besonders bevorzugt von 45° bis 80°, aufweist.

6. Abgasstrang nach einem der vorhergehenden Ansprüche, **dadurch gekennzeichnet, dass** der Abströmkanal (23) einen runden, insbesondere eine kreisrunden, Querschnitt aufweist.

7. Abgasstrang nach einem der vorhergehenden Ansprüche, **dadurch gekennzeichnet, dass** der Querschnitt des Abströmkanals (23) entlang des Abströmkanals (23) im Wesentlichen konstant ist.

8. Abgasstrang nach einem der vorhergehenden Ansprüche, **dadurch gekennzeichnet, dass** der Querschnitt des Wastegate-Strömungskanals (25) stromab des Wastegates (11) größer ausgebildet ist als der maximale Öffnungsquerschnitt der Wastegateöffnung des Wastegates (11).

9. Abgasstrang nach einem der vorhergehenden Ansprüche, **dadurch gekennzeichnet, dass** der abgasturbinenseitige Turbinen-Abgasstrom-Einströmbereich (21) auf der Abströmseite (12) der Abgasturbine (3) mittels wenigstens einer mündungsraumseitig vorgesehenen Zwischenwand (33) von dem abgasturbinenseitigen Wastegate-Abgasstrom-Einströmbereich (27) abgetrennt ist.

10. Brennkraftmaschine mit einem Abgasstrang nach einem der Ansprüche 1 bis 9.

## Claims

1. Exhaust tract for an internal combustion engine, having an exhaust turbine (3), arranged in the exhaust tract,
the exhaust turbine (3) having an exhaust turbine housing comprising a turbine flow duct (17), into which an exhaust gas flow (9) coming from the internal combustion engine flows and in which a turbine rotor (19) of the exhaust turbine (3), driven by the exhaust gas flow (9), is arranged,
the exhaust turbine (3) further comprising a wastegate (11), by means of which a proportion of the exhaust gas flow (9) flowing into the exhaust turbine (3) can be made to bypass the turbine rotor (19) as a wastegate exhaust gas flow (15),
the turbine flow duct (17) ducting the exhaust gas flow (9) via the turbine rotor (19), and the wastegate (11) on a discharge side (12) of the exhaust turbine (3) opening into an exhaust turbine-side outlet chamber (57), and
a discharge duct (23), via which an exhaust gas flow (13) coming from the turbine rotor (19) and the wastegate exhaust gas flow (15) fed via the wastegate (11) flow out, adjoining the discharge side (12) of the exhaust turbine (3),
the exhaust turbine-side outlet chamber (57) being subdivided into a first exhaust turbine-side turbine exhaust gas flow inlet area (21), into which the exhaust gas flow (13) coming from the turbine rotor (19) flows and which is adjoined by the discharge duct (23), and a second exhaust turbine-side wastegate exhaust gas flow inlet area (27), which is flow-separated from the first inlet area (21) and into which the exhaust gas flow (15) fed via the wastegate (11) flows,
a wastegate flow duct (25) being provided adjoining the wastegate exhaust gas flow inlet area (27), which downstream of the turbine exhaust gas flow inlet area (21) opens into the adjoining discharge duct (23), in such a way that the wastegate exhaust gas flow (15) introduced into the discharge duct (23) via the wastegate flow duct (25) flows through the discharge duct (23) as a peripheral flow on the inside wall (14) of the discharge duct (23) and spirally around a central longitudinal axis (A_{A}) of the discharge duct (23) in the direction away from the exhaust turbine (3),
the discharge duct (23) directly adjoining the exhaust turbine-side turbine exhaust gas flow inlet area (21), in such a way that the exhaust gas flow (13) coming from the turbine rotor (19) flows through the discharge duct (23) in the direction of the central longitudinal axis (A_{A}) of the discharge duct (23) away from the exhaust turbine (3), and
the discharge duct (23) being formed by a separate component, which is connected to the exhaust turbine (3), **characterized in that**
the wastegate flow duct (25), relative to a cross section through the discharge duct (23), tangentially adjoins an outer wall portion (51) of the discharge duct (23), preferably in such a way that an outer (relative to the cross section) and straight outlet-side duct wall portion (49) of the wastegate flow duct (25) lies approximately at the level of an apex (S) of the discharge duct (23), and preferably merges continuously into the latter.

2. Exhaust tract according to Claim 1, **characterized in that** the co-ordinated outlet apertures of the exhaust turbine-side turbine exhaust gas flow inlet area (21) and of the adjoining discharge duct (23) are of substantially identical design, the co-ordinated outlet apertures of the exhaust turbine-side turbine exhaust gas flow inlet area (21) and of the adjoining discharge duct (23) preferably aligning with one another.

3. Exhaust tract according to Claim 1 or 2, **characterized in that** the cross sectional area, preferably the diameter, of the wastegate flow duct (25) is less than the cross sectional area, preferably the diameter, of the discharge duct (23) at least in the area where it opens into the discharge duct (23).

4. Exhaust tract according to Claim 3, **characterized in that** a central longitudinal axis (Aw) of the wastegate flow duct (25) is situated at a defined distance from the apex (S) of the discharge duct (23), preferably a distance which is approximately equal to between one and two thirds, preferably about half, of the diameter of the wastegate flow duct (25) in the outlet area of the wastegate flow duct (25) where it opens into the discharge duct (23).

5. Exhaust tract according to one of the preceding claims, **characterized in that** the wastegate flow duct (25) opens angularly into the discharge duct (23), in such a way that an angle (α) between at least the outlet-side area of the wastegate flow duct (25) and hence the wastegate exhaust gas flow (15) flowing into the discharge duct (23) on the one hand, and a cross sectional plane (E), formed by the cross section of the discharge duct (23) in the outlet area and/or oriented transversely to the longitudinal axis (A_{A}) of the discharge duct (23) in the outlet area of the wastegate flow duct (25) on the other, ranges from 30° to 80°, preferably from 40° to 80°, more preferably from 45° to 80°.

6. Exhaust tract according to one of the preceding claims, **characterized in that** the discharge duct (23) has a round, in particular a circular cross section.

7. Exhaust tract according to one of the preceding claims, **characterized in that** the cross section of the discharge duct (23) is substantially constant along the discharge duct (23).

8. Exhaust tract according to one of the preceding claims, **characterized in that** the cross section of the wastegate flow duct (25) downstream of the wastegate (11) is larger than the maximum aperture cross section of the wastegate aperture of the wastegate (11).

9. Exhaust tract according to one of the preceding claims, **characterized in that** the exhaust turbine-side turbine exhaust gas flow inlet area (21) on the discharge side (12) of the exhaust turbine (3) is separated from the exhaust turbine-side wastegate exhaust gas flow inlet area (27) by means of at least one dividing wall (33) provided on the outlet chamber side.

10. Internal combustion engine having an exhaust tract according to one of Claims 1 to 9.

## Revendications

1. Ligne des gaz d'échappement pour un moteur à combustion interne, comprenant une turbine à gaz d'échappement (3) disposée dans la ligne des gaz d'échappement,
dans laquelle la turbine à gaz d'échappement (3) comprenant un carter de turbine à gaz d'échappement comprend un canal d'écoulement de turbine (17) dans lequel afflue un flux de gaz d'échappement (9) provenant du moteur à combustion interne et dans lequel est disposée une roue de turbine (19) de la turbine à gaz d'échappement (3) pouvant être entraînée par le flux de gaz d'échappement (9),
dans laquelle la turbine à gaz d'échappement (3) comprend en outre un limiteur de pression de suralimentation (wastegate) (11) au moyen duquel une partie du flux de gaz d'échappement (9) affluant dans la turbine à gaz d'échappement (3) peut être amenée à contourner la roue de turbine (19) en tant que flux de gaz d'échappement de limiteur de pression de suralimentation (15),
dans laquelle le canal d'écoulement de turbine (17) guidant le flux de gaz d'échappement (9) par le biais de la roue de turbine (19) et le limiteur de pression de suralimentation (11) débouchent dans une chambre de débouché (57) côté turbine à gaz d'échappement sur un côté d'évacuation (12) de la turbine à gaz d'échappement (3), et
dans laquelle un canal d'évacuation (23) se raccorde au côté d'évacuation (12) de la turbine à gaz d'échappement (3), canal d'évacuation par le biais duquel un flux de gaz d'échappement (13) provenant de la roue de turbine (19) et le flux de gaz d'échappement de limiteur de pression de suralimentation (15) guidé par le biais du limiteur de pression de suralimentation (11) s'écoulent,
dans laquelle la chambre de débouché (57) côté turbine à gaz d'échappement est divisée en une première région d'afflux de flux de gaz d'échappement de turbine (21) côté turbine à gaz d'échappement, région dans laquelle afflue le flux de gaz d'échappement (13) provenant de la roue de turbine (19) et à laquelle le canal d'évacuation (23) se raccorde, et une deuxième région d'afflux de flux de gaz d'échappement de limiteur de pression de suralimentation (27) côté turbine à gaz d'échappement séparée fluidiquement de la première région d'afflux (21) et dans laquelle le flux de gaz d'échappement (15) guidé par le biais du limiteur de pression de suralimentation (11) afflue,
dans laquelle un canal d'écoulement de limiteur de pression de suralimentation (25) se raccordant à la région d'afflux de flux de gaz d'échappement de limiteur de pression de suralimentation (27) est prévu, lequel canal d'écoulement débouche en aval de la région d'afflux de flux de gaz d'échappement de turbine (21) dans le canal d'évacuation (23) se raccordant à celle-ci, de telle sorte que le flux de gaz d'échappement de limiteur de pression de suralimentation (15) introduit dans le canal d'évacuation (23) par le biais du canal d'écoulement de limiteur de pression de suralimentation (25) s'écoule à travers le canal d'évacuation (23) comme un écoulement périphérique au niveau de la paroi intérieure (14) du canal d'évacuation (23) et en forme de spirale autour d'un axe longitudinal central (A_{A}) du canal d'évacuation (23) à l'écart de la turbine à gaz d'échappement (3),
dans laquelle le canal d'évacuation (23) se raccorde directement à la région d'afflux de flux de gaz d'échappement de turbine (21) côté turbine à gaz d'échappement, de telle sorte que le flux de gaz d'échappement (13) provenant de la roue de turbine (19) s'écoule à travers le canal d'évacuation (23) dans la direction de l'axe longitudinal central (A_{A}) du canal d'évacuation (23) à l'écart de la turbine à gaz d'échappement (3), et
dans laquelle le canal d'évacuation (23) est formé par un composant séparé qui est relié à la turbine à gaz d'échappement (3), **caractérisée en ce que**
le canal d'écoulement de limiteur de pression de suralimentation (25), par rapport à une section transversale à travers le canal d'évacuation (23), se raccorde tangentiellement à une partie de paroi extérieure (51) du canal d'évacuation (23), de préférence de telle sorte qu'une partie de paroi de canal (49), extérieure par rapport à la section transversale et de forme rectiligne du côté du débouché, du canal d'écoulement de limiteur de pression de suralimentation (25) se situe approximativement à hauteur d'un sommet (S) du canal d'évacuation (23) et se prolonge de préférence de manière continue par celui-ci.

2. Ligne des gaz d'échappement selon la revendication 1, **caractérisée en ce que** les ouvertures de débouché associées l'une à l'autre de la région d'afflux de flux de gaz d'échappement de turbine (21) et du canal d'évacuation (23) s'y raccordant sont formées sensiblement de manière identique, les ouvertures de débouché associées l'une à l'autre de la région d'afflux de flux de gaz d'échappement de turbine (21) côté turbine à gaz d'échappement et du canal d'évacuation (23) s'y raccordant étant de préférence disposées de manière alignée l'une par rapport à l'autre.

3. Ligne des gaz d'échappement selon la revendication 1 ou 2, **caractérisée en ce que** l'aire en section transversale, de préférence le diamètre, du canal d'écoulement de limiteur de pression de suralimentation (25) est, au moins dans la région de son débouché dans le canal d'évacuation (23), inférieur(e) à l'aire en section transversale, de préférence au diamètre, du canal d'évacuation (23).

4. Ligne des gaz d'échappement selon la revendication 3, **caractérisée en ce qu'**un axe longitudinal central (Aw) du canal d'écoulement de limiteur de pression de suralimentation (25) est situé à une distance définie du sommet (S) du canal d'évacuation (23), de préférence à une distance qui correspond approximativement à un tiers jusqu'à deux tiers, de préférence approximativement à la moitié du diamètre du canal d'écoulement de limiteur de pression de suralimentation (25) dans la région de débouché du canal d'écoulement de limiteur de pression de suralimentation (25) dans le canal d'évacuation (23).

5. Ligne des gaz d'échappement selon l'une des revendications précédentes, **caractérisée en ce que** le canal d'écoulement de limiteur de pression de suralimentation (25) débouche de manière angulaire dans le canal d'évacuation (23), de telle sorte qu'un angle (α) entre d'une part au moins la région partielle, côté débouché, du canal d'écoulement de limiteur de pression de suralimentation (25) et donc le flux de gaz d'échappement de limiteur de pression de suralimentation (15) affluant dans le canal d'évacuation (23) et d'autre part un plan de section transversale (E) formé par la section transversale du canal d'évacuation (23) dans la région de débouché et/ou orienté transversalement à l'axe longitudinal (A_{A}) du canal d'évacuation (23) dans la région de débouché du canal d'écoulement de limiteur de pression de suralimentation (25) présente une valeur d'angle de 30° à 80°, de préférence de 40° à 80°, de manière particulièrement préférée de 45° à 80°.

6. Ligne des gaz d'échappement selon l'une des revendications précédentes, **caractérisée en ce que** le canal d'évacuation (23) présente une section transversale ronde, en particulier circulaire.

7. Ligne des gaz d'échappement selon l'une des revendications précédentes, **caractérisée en ce que** la section transversale du canal d'évacuation (23) est sensiblement constante le long du canal d'évacuation (23).

8. Ligne des gaz d'échappement selon l'une des revendications précédentes, **caractérisée en ce que** la section transversale du canal d'écoulement de limiteur de pression de suralimentation (25) en aval du limiteur de pression de suralimentation (11) est plus grande que la section transversale d'ouverture maximale de l'ouverture du limiteur de pression de suralimentation (11).

9. Ligne des gaz d'échappement selon l'une des revendications précédentes, **caractérisée en ce que** la région d'afflux de flux de gaz d'échappement de turbine (21) côté turbine à gaz d'échappement sur le côté d'évacuation (12) de la turbine à gaz d'échappement (3) est séparée de la région d'afflux de flux de gaz d'échappement de limiteur de pression de suralimentation (27) côté turbine à gaz d'échappement au moyen d'au moins une paroi intermédiaire (33) prévue du côté de la chambre de débouché.

10. Moteur à combustion interne comprenant une ligne des gaz d'échappement selon l'une des revendications 1 à 9.
